# EUROPEAN PATENT SPECIFICATION

(11) **EP 3 924 404 B1**
(45) Date of publication and mention of the grant of the patent: **12.04.2023**
(21) Application number: 20705190.5
(22) Date of filing: 13.02.2020
(51) Int. Cl.: C08J 3/22, C08J 11/04, C08L 51/06, C08L 23/10

(54) **A MULTI-COMPATIBILIZER FOR A WASTE POLYMER MIXTURE AND A WASHING MACHINE MADE OF THE COMPATIBILIZED POLYMER BLEND**
MULTIKOMPATIBILISATOR FÜR EINE ABFALLPOLYMERMISCHUNG UND WASCHMASCHINE AUS DER KOMPATIBILISIERTEN POLYMERMISCHUNG
AGENT DE COMPATIBILITÉ MULTIPLE POUR UN MÉLANGE DE POLYMÈRES DE DÉCHETS ET MACHINE À LAVER CONSTITUÉE DU MÉLANGE DE POLYMÈRES RENDUS COMPATIBLES

(30) Priority: 13.02.2019 TR 201902164
(43) Date of publication of application: 22.12.2021
(73) Proprietor: Arçelik Anonim Sirketi, 34445 Istanbul (TR)
(72) Inventor: YARGICI KOVANCI, Ceren, 34950 Istanbul (TR); KAYMAKCI, Orkun, 34950 Istanbul (TR); YENIGUL, Beril Saadet, 34950 Istanbul (TR); CIHANGIR, Metehan, 34950 Istanbul (TR)
(86) International application number: PCT/EP2020/053775
(87) International publication number: WO 2020/165353

(56) References cited:
- CN-A- 101 724 239
- CN-A- 105 131 499
- DATABASE WPI Week 201403 Thomson Scientific, London, GB; AN 2013-P00899 XP002798687, & CN 103 013 149 A (UNIV HANGZHOU NORMAL) 3 April 2013 (2013-04-03)

## Description

The present invention relates to a multi compatibilizer for a waste polymer mixture, a compatibilized polymer blend and a washing machine which is made of the harmonized polymer blend.

Polymer mixtures are typically described by coarse, unstable phase morphologies. This results in poor mechanical properties. Compatibilizers are used when at least two different polymers that may not be miscible with each other are required to obtain a balance of properties. Compatibilization in polymer chemistry is the addition of a substance to an immiscible blend of polymers that will increase their increase their interfacial adhesion between the immiscible plastics and reduces the blend interfacial tension. Compatibilization of the system will give rise to the a finer morphology and more homogeneous dispersion of polymers by creating interactions between the two previously immiscible polymers.

Plastic parts made of polymer mixtures can be reused by the recycling methods. However, due to the different physical properties of the components in these waste polymers, some material defects can be occurred. If many different types of the polymeric materials required to be processed impurely with each other, they cause phase separation and cannot to be processed together. At the same time, it causes decreasing of mechanical properties, flow properties deterioration and peeling problems in produced parts.

Re-using of the waste polymer mixtures, of the white goods sector has a great importance. Sustainable and environmentally friendly production is ensured by reusing waste polymers by means of the compatibilizers.

Patent no. KR20030015679 in state of the art discloses a thermoplastic resin composition which is comprising a compatibilizer for polypropylene, poly (acrylonitrile-butadiene-styrene), and a copolymer of propylene and styreneacrylonitrile as a copolymer compatibilizer (PP-SAN) and an automobile part manufactured by using the thermoplastic resin composition.

The aim of the present invention is to realize a compatibilized polymer blends by the help of a multi compatibilizer, to produce the washing machine.

With the multi-compatibilizer composition of the present invention, simultaneous processability of the waste polymers with different melting points is provided. The present invention prevents the degradation of the waste polymers with low melting points.

Under the favor of the multi-compatibilizer composition, the impact strength of the waste polymers is increased by reducing the phase separations.

Thanks to the invention, waste plastic parts' polymer mixture can be compatibilized harmonized with each other and reused in the washing machine plastic parts' injection molding process.

A multi-compatibilizer for a waste polymer mixture, according to the subject of the invention comprising:
- a polypropylene (PP),
- a thermal stabilizer protecting the waste polymer mixture against the degradation due to the thermal oxidation,
- a polypropylene grafted 2-hydroxyethyl methacrylate,
- a polypropylene grafted maleic anhydride,
- a maleic anhydride-grafted
   [styrene-b-(ethylene-co-butylene)-b-styrene].

The multi compatibilizer according to the invention is suitable for the harmonization of waste polymer mixture which is comprising a polypropylene (PP) and a polypropylene with an inorganic filler such as talc and/or calcite and an acrylonitrile-butadiene-styrene (ABS) and a glass fiber reinforced polypropylene and a polycarbonate (PC)-acrylonitrile-butadiene-styrene (ABS) blend and a polyamide66 (PA66) and the polycarbonate (PC) and a rubber. Polypropylene in the multi-compatibilizer composition has a main chemical carrier function for the harmonization of the polymers in the waste polymer mixture because of the waste polymer mixture is mainly comprising the polypropylene. The thermal stabilizer protects the waste polymer mixture against the degradation due to the thermal oxidation. The ethylene and methylene based copolymer are used for the harmonization of polypropylene and acrylonitrile-butadiene-styrene (ABS). The polypropylene grafted maleic anhydride serves as an adapter for inorganic fillers in polypropylene and the maleic anhydride-grafted [styrene-b-(ethylene-co-butylene)-b-styrene] (SEBS-g-MAH). is used for compatibilization of the polycarbonate (PC), polyamide (PA66) and polypropylene. By this means, the chemical and physical properties of the waste polymers can be compatibilized.

In an embodiment of the present invention, the multi-compatibilizer further comprising a neutralized ethylene-co-methacrylic acid with sodium ion. Thus, the rubber in the waste polymer mixture can be compatibilized with the other waste.

In an embodiment of the present invention, the polypropylene is selected as a homopolymer polypropylene in the multi-compatibilizer composition. Preferably, when homopolymer polypropylene is selected, the compatibilization of the waste polymers can be achieved in a chemically more stable manner.

In an embodiment of the present invention, the thermal stabilizer is selected as pentaerythritol tetrakis (3-(3,5-di-tert-butyl-4 hydroxyphenyl) propionate and tris(2,4-di-tert-butylphenyl) phosphide). Pentaerythritol tetrakis (3-(3,5-di-tert-butyl-4 hydroxyphenyl) propionate has a low volatility and it has a function of thermal stabilization. Tris(2,4-di-tert-butylphenyl) phosphide increases the chemical activity of pentaerythritol tetrakis (3-(3,5-di-tert-butyl-4 hydroxyphenyl) propionate and used to protect resins against the oxidation during the heating processed by acting as a hydro peroxide decomposer. It also provides the additional stability to the polymers.

Polypropylene grafted 2-hydroxyethyl methacrylate gives the optimum chemical harmonization results for the polypropylene (PP) and the acrylonitrile-butadiene-styrene (ABS).

In an embodiment of the present invention, the multi-compatibilizer comprises the polypropylene between 5% and 50% by weight. This range is chosen to harmonize waste polymer mixture effectively by using the amount of polypropylene in the compatibilizer composition not more than the deformed polypropylene in the waste polymer mixture.

In an embodiment of the present invention, the multi-compatibilizer comprises the thermal stabilizer between 0.02% and 5% by weight. This range is chosen to prevent the thermal stabilizers damaging to the waste polymer materials. More preferably, the multi compatibilizer comprises the thermal stabilizers between 0.1% and 0.2% by weight. This range gives the maximum performance for thermal stabilizers in the compatibilizer composition.

In an embodiment of the present invention, the multi-compatibilizer comprises the polypropylene grafted maleic anhydride between 1% and 10% by weight and maleic anhydride-grafted [styrene-b-(ethylene-co-butylene)-b-styrene] between 1% and 10% by weight and the neutralized ethylene-co-methacrylic acid with sodium ion between 1% and 10% by weight. At these ratios, these said components in the multi-compatibilizer encircles the polymer droplets and attaches one immiscible polymer to another. Chosen ratios prevent thickening of compatibilizer around the polymer droplets otherwise the link between the matrix and the polymers will lost.

In an embodiment of the present invention, the polypropylene grafted maleic anhydride has 2.3 g/min melt flow index and the ethylene-methylene based copolymer has 0.3 g/min melt flow index. The materials in this flow properties enable the harmonization of the waste polymers uniformly.

As a result of the mixing the said multi-compatibilizer composition and the waste polymer mixture, which comprising a polypropylene (PP) between 5% and 20% by weight and a polypropylene with an inorganic filler between 40% and 70% by weight and an acrylonitrile-butadiene-styrene (ABS) between 10% and 30% by weight and a glass fiber reinforced polypropylene (PP) 5% and 35% by weight and a polycarbonate (PC)- acrylonitrile-butadiene-styrene (ABS) blend between 2% and 10% by weight and a polyamide (PA66) between 0.5% and 5% by weight and the polycarbonate (PC) 0.5% and 5% by weight and a rubber between 0.1% and 30% percentage by weight, a harmonized polymer blend has been obtained.

A washing machine can be produced by using the plastic parts are produced by the new harmonized polymer blend.

By means of the present invention, waste polymer mixture which comprises lots of different melting point compounds can be compatibilized and a new processable polymer blend can be obtained and this polymer blend can be used to produce a washing machine.

## Claims

1. A multi-compatibilizer for a waste polymer mixture comprising:
- a polypropylene (PP),
- a thermal stabilizer protecting the waste polymer mixture against the deterioration due to the thermal oxidation,
- a polypropylene grafted 2-hydroxyethyl methacrylate,
- a polypropylene grafted maleic anhydride,
- a maleic anhydride-grafted [styrene-b-(ethylene-co-butylene)-b-styrene].

2. A multi-compatibilizer according to claim 1, for a waste polymer mixture further comprising a neutralized ethylene-co-methacrylic acid with sodium ion.

3. A multi-compatibilizer according to claims 1 or 2, wherein the thermal stabilizer is selected as pentaerythritol tetrakis (3-(3,5-di-tert-butyl-4 hydroxyphenyl) propionate and tris(2,4-di-tert-butylphenyl) phosphite.

4. A multi-compatibilizer according to any one of the preceding claims, wherein it comprises the polypropylene between 5% and 50% by weight.

5. A multi-compatibilizer according to any one of the preceding claims, wherein it comprises the thermal stabilizer between 0.02% and 5%, more preferably between 0.1 % and 0.2% by weight.

6. A multi-compatibilizer according to any one of the preceding claims, wherein it comprises the polypropylene grafted maleic anhydride between 1% and 10% by weight and the maleic anhydride-grafted [styrene-b-(ethylene-co-butylene)-b-styrene] between 1% and 10% by weight.

7. A multi compatibilizer according to claim 2 to 6, wherein it comprises the neutralized ethylene-co-methacrylic acid with sodium ion between 1% and 10% by weight.

8. A harmonized polymer blend, wherein the harmonized polymer blend comprises the multi-compatibilizer according to any one of the preceding claims and the waste polymer mixture which comprises a polypropylene (PP) between 5% and 20% by weight and a polypropylene with an inorganic filler between 40% and 70% by weight and an acrylonitrile-butadiene-styrene (ABS) between 10% and 30% by weight and a glass fiber reinforced polypropylene (PP) between 5% and 35% by weight and a polycarbonate (PC)- acrylonitrile-butadiene-styrene (ABS) blend between 2% and 10% by weight and a polyamide (PA66) between 0.5% and 5% by weight and the polycarbonate (PC) between 0.5% and 5% by weight and a rubber between 0.1% and 30% by weight.

9. A washing machine, wherein it comprises the plastic parts which are produced by the harmonized polymer blend according to claim 8.

## Patentansprüche

1. Ein Multi-Kompatibilisierungsmittel für eine Abfallpolymermischung, umfasst:
- ein Polypropylen (PP),
- einen thermischen Stabilisator, der die Abfallpolymermischung vor der Verschlechterung aufgrund der thermischen Oxidation schützt,
- ein mit Polypropylen gepfropftes 2-Hydroxyethylmethacrylat,
- ein mit Polypropylen gepfropftes Maleinsäureanhydrid,
ein mit Maleinsäureanhydrid gepfropftes [Styrol-b-(ethylen-co-butylen)-b-styrol].

2. Ein Multi-Kompatibilisierungsmittel, wie in Anspruch 1 aufgeführt, für eine Polymerabfallmischung, umfasst ferner eine neutralisierte Ethylen-co-methacrylsäure mit Natriumionen.

3. Ein Multi-Kompatibilisierungsmittel, wie in Anspruch 1 oder 2 aufgeführt, wobei der Wärmestabilisator aus Pentaerythritoltetrakis(3-(3,5-di-tert-butyl-4-hydroxyphenyl)propionat und Tris(2,4-di-tert-butylphenyl)phosphit ausgewählt ist.

4. Ein Multi-Kompatibilisierungsmittel, wie in einem der vorherigen Ansprüchen aufgeführt, wobei es das Polypropylen zwischen 5 und 50 Gew.-% umfasst.

5. Ein Multi-Kompatibilisierungsmittel, wie in einem der vorherigen Ansprüchen aufgeführt, wobei es den thermischen Stabilisator zwischen 0,02 und 5 Gew.-%, bevorzugter zwischen 0,1 und 0,2 Gew.-%, umfasst.

6. Ein Multi-Kompatibilisierungsmittel, wie in einem der vorherigen Ansprüchen aufgeführt, wobei es das mit Polypropylen gepfropfte Maleinsäureanhydrid zwischen 1 und 10 Gew.-% und das mit Maleinsäureanhydrid gepfropfte [Styrol-b-(ethylen-co-butylen)-b-styrol] zwischen 1 und 10 Gew.-% umfasst.

7. Ein Multi-Kompatibilisierungsmittel, wie in den Ansprüchen 2 bis 6 aufgeführt, wobei es die neutralisierte Ethylen-co-methacrylsäure mit Natriumionen zwischen 1 und 10 Gew.-% umfasst.

8. Eine harmonisierte Polymermischung, nach einem der vorangehenden Ansprüche, wobei die harmonisierte Polymermischung den Multikompatibilisator umfasst, und das Abfallpolymergemisch, das ein Polypropylen (PP) zwischen 5 und 20 Gew.-% und ein Polypropylen mit einem anorganischen Füllstoff zwischen 40 und 70 Gew.-% und ein AcrylnitrilButadien-Styrol (ABS) umfasst zwischen 10 und 30 Gew.-% und ein glasfaserverstärktes Polypropylen (PP) zwischen 5 und 35 Gew.-% und eine Mischung aus Polycarbonat (PC)-Acrylnitril-Butadien-Styrol (ABS) zwischen 2 und 10 Gew.-% und ein Polyamid (PA66) zwischen 0,5 und 5 Gew.-% und das Polycarbonat (PC) zwischen 0,5 und 5 Gew.-% und ein Kautschuk zwischen 0,1 und 30 Gew.-%.

9. Eine Waschmaschine ist **dadurch gekennzeichnet, dass** sie Kunststoffteile umfasst, die durch die abgestimmte Polymermischung nach Anspruch 8 hergestellt sind.

## Revendications

1. Un multi-compatibilisateur pour un mélange de déchets polymères comprenant :
- un polypropylène (PP),
- un stabilisateur thermique protégeant le mélange de déchets polymères contre la détérioration due à l'oxydation thermique,
- un méthacrylate de 2-hydroxyéthyle greffé au polypropylène,
- un anhydride maléique greffé sur du polypropylène,
- un [styrène-b-(éthylène-co-butylène)-b-styrène] greffé à l'anhydride maléique.

2. Multi-compatibilisateur selon la déclaration 1, pour un mélange de déchets polymères comprenant en outre un acide éthylène-co-méthacrylique neutralisé avec des ions sodium.

3. Multi-compatibilisateur selon les déclarations 1 ou 2, dans lequel le stabilisateur thermique est choisi parmi le pentaérythritol tétrakis (3-(3,5-di-tert-butyl-4 hydroxyphényl) propionate et le tris(2,4-di-tert-butylphényl) phosphite.

4. Multi-compatibilisateur selon l'une quelconque des déclarations précédentes, dans lequel il comprend le polypropylène entre 5% et 50% en poids.

5. Multi-compatibilisateur selon l'une quelconque des déclarations précédentes, dans lequel il comprend le stabilisateur thermique entre 0,02% et 5%, plus préférablement entre 0,1% et 0,2% en poids.

6. Multi-compatibilisateur selon l'une quelconque des déclarations précédentes, dans lequel il comprend l'anhydride maléique greffé au polypropylène entre 1 % et 10 % en poids et le [styrène-b-(éthylène-co-butylène)-b-styrène] greffé à l'anhydride maléique entre 1 % et 10 % en poids.

7. Multi-compatibilisateur selon les déclarations 2 à 6, dans lequel il comprend l'acide éthylène-co-méthacrylique neutralisé avec des ions sodium entre 1% et 10% en poids.

8. Un mélange de polymères harmonisé, dans lequel le mélange de polymères harmonisé comprend le multi-compatibilisateur selon l'une quelconque des déclarations précédentes et le mélange de déchets de polymères qui comprend un polypropylène (PP) entre 5% et 20% en poids et un polypropylène avec une charge inorganique entre 40% et 70% en poids et un acrylonitrile- butadiène-styrène (ABS) entre 10% et 30% en poids et un polypropylène (PP) renforcé par des fibres de verre entre 5%-35% en poids et un mélange de polycarbonate (PC)-acrylonitrile-butadiène-styrène (ABS) entre 2% et 10% en poids et un polyamide (PA66) entre 0. 5% et 5% en poids et le polycarbonate (PC) entre 0,5% et 5% en poids et un caoutchouc entre 0,1% et 30% en poids.

9. Une machine à laver, dans laquelle elle comprend les pièces en plastique qui sont produites par le mélange de polymères harmonisés selon la déclaration 8.
